# EUROPEAN PATENT SPECIFICATION

(11) **EP 3 191 682 B1**
(45) Date of publication and mention of the grant of the patent: **16.10.2019**
(21) Application number: 15839560.8
(22) Date of filing: 10.09.2015
(51) Int. Cl.: E21B 34/06, F16K 17/16, E21B 33/12, E21B 33/134

(54) **CERAMIC RUPTURE DOME FOR PRESSURE CONTROL**
KERAMISCHE BRUCHKUPPEL ZUR DRUCKREGELUNG
DÔME DE RUPTURE EN CÉRAMIQUE POUR RÉGULATION DE PRESSION

(30) Priority: 10.09.2014 CA 2863603
(43) Date of publication of application: 19.07.2017
(73) Proprietor: Armor Tools International Inc., Red Deer, Alberta T4P 3Y7 (CA)
(72) Inventor: PETROWSKY, Conrad, Red Deer, Alberta T4P 3Y7 (CA)
(74) Representative: Marles, Alan David
(86) International application number: PCT/CA2015/050873
(87) International publication number: WO 2016/037281

(56) References cited:
- WO-A1-2010/068329
- WO-A1-2010/068329
- WO-A1-2011/041456
- WO-A1-2011/041456
- CA-A1- 2 819 681
- CA-A1- 2 819 681
- CA-A1- 2 863 603
- RU-C1- 2 218 539
- US-A1- 2013 126 152
- US-A1- 2014 083 716
- US-A1- 2014 083 716

## Description

### FIELD OF INVENTION

The present invention relates generally to a one-time-use pressure-actuated valve or closure to selectively withstand fluid pressure from one side of the device until the closure is removed remotely. This is done by configuring the device as a frangible dome which can withstand high pressures from one side but will rupture in the presence of high pressure on its other side. The rupture dome provides a mechanism to isolate downhole fluid under high pressures during initial operations in a drillstring in a well for a period of time selectable by the driller or operator, and then to remove the isolation by breaking the rupture dome remotely by application of extra fluid pressure or other forces from surface.

These operations are useful in directional, horizontal or deviated wells during snubbing, bridge-plug retrieval or zone separation operation in combination with packers and/or completion strings. The dome of this device provides pressure isolation for vertical as well as non-vertical operations which can be opened without wireline, and can be used in conjunction with other equipment such as subassemblies which include landings for retrieval, or other functions.

### BACKGROUND OF THE INVENTION

In drilling, completion or service operations in a deviated well, it is sometimes important to be able to seal the tubing string to isolate production or other pressurized zones of the wellbore.

In the past, tubing end-plugs have been used during injection of tubing into such a well, the plugs generally being a metallic or aluminum disc attached to the bottom of the tubing string prior to injection, and then the removal of the metallic disc from the tubing string at or near bottom hole. An example is found in US244,042 Farrar (1881). This has the undesirable effect of leaving the metal at the bottom workface of the wellbore which is difficult or expensive to remove and can interfere with further drilling or other operations. These devices have only been run at the bottom of a tubing string.

Another mechanism sometimes seen is the use of an Otis® nipple, consisting of multiple profiles to receive a variety of plug devices via wireline delivery downhole. These mechanisms provide for a single plug, and while unpluggable and repluggable, are constrained by the plug delivery mechanism - that is, wireline plugs may be difficult to retrieve from deep deviated or horizontal wellbores, and may be impossible to inject and refit in non-vertical orientations. Additionally, if such a plug fitting fails during operations, the wireline plug may become a projectile, and two wireline plugs cannot or cannot easily be installed during or for operations. Similarly, multi-profile landing nipples to receive a variety of plugs are manufactured under the Baker® trade name.

Rupture domes have been used in similar situations downhole. For instance, a system providing a "Frangible Pressure Seal" is disclosed in Canadian Patent Application 2,228,728 by Frazier (CA'728). In that case ceramic shells with a circular seating face and a radial curvature are provided as a breakable seal for inclusion in a downhole subassembly. In CA'728, the ceramic disc is formed with a precise arcuate shape (in cross-section) to offer maximum pressure resistance. CA'728 is designed to provide a strong barrier to fluid pressures, yet be capable of being broken by wielding a breaking implement downhole (such as by dropping a bar down the tubing). This design would be unsuitable, for instance, in a deviated or non-vertical well-bore's tubing string because the bar or breaking implement could not be propelled by gravity alone should the non-vertical portion of the wellbore be a very great distance, or should the curvature of the deviated bore impair the breaking tool's travel velocity (or striking force). Additionally, where the domes of '728 are ruptured, the resulting passage may be irregular and restrict fluid flow in the tubing's bore past the remnants of the dome. As well, resulting fragments may be irregular or large which may interfere with fittings, drilling, or other well bore characteristics or operations.

RU 2,218,539 discloses a destructible cover for a missile launch tube such as for a submarine, which cover can withstand sea pressures encountered when the submarine is submerged or at sea, yet breaks away in a controlled fashion when a missile is launched from the launch tube covered by the cover.

US 2013/126,152 discloses a pressure relief device which includes a scored metal disc attached in-line in surface equipment at well fracturing locations to prevent over-pressuring surface equipment.

CA 2,819,681 discloses a frangible disc deployed as a seal in bottom-hole equipment for well completions, the seal being removable by direct application of mechanical force to the disc body against subsurface equipment.

### SUMMARY OF THE INVENTION

To mitigate some of the problems of the prior art, the rupture dome of this invention is manufactured of a frangible material with a specific arcuate domed shape and with included features in at least one surface of the domed shape which guide and control fragmentation of the dome when it is broken so that the pieces of the ruptured dome are of a controlled size and shape designed to avoid plugging or hanging in the wellbore or any associated equipment. The frangible dome made of a material such as certain ceramics, glass, should not react negatively with or interact to cause damage to the well or associate equipment.

According to the present invention there is provided a rupture dome for use as a breakable seal for an internal passageway of a wellbore tubing, said rupture dome being formed of a breakable material, said breakable material being ceramic, said rupture dome including:
i. a circular-shaped body with dome-shaped cross-section with
   a. a convex side;
   b. a concave side; and
   c. an attached circumferential rim for mounting to a seal on the inside of the tubing or a fitting on the tubing;
ii. the convex side having a pattern of features included in its surface to guide the breakage of the rupture dome, the pattern of features comprising at least a linear depression or ridge in the surface of the convex side;
iii. a portion of the body defined between the convex side and concave side forming a breakaway section, being frangible, and configured to hold high fluid pressure applied to the convex side, and to break when fluid pressure applied to the concave side exceeds a threshold;
wherein the breakaway section when ruptured as a result of application of pressure to the concave side which exceeds the threshold, breaks into pre-determined fragments defined at least in part by the features included in the surface of the convex side.

Preferred features are set out in the attached dependent claims.

### BRIEF DESCRIPTION OF THE DRAWINGS

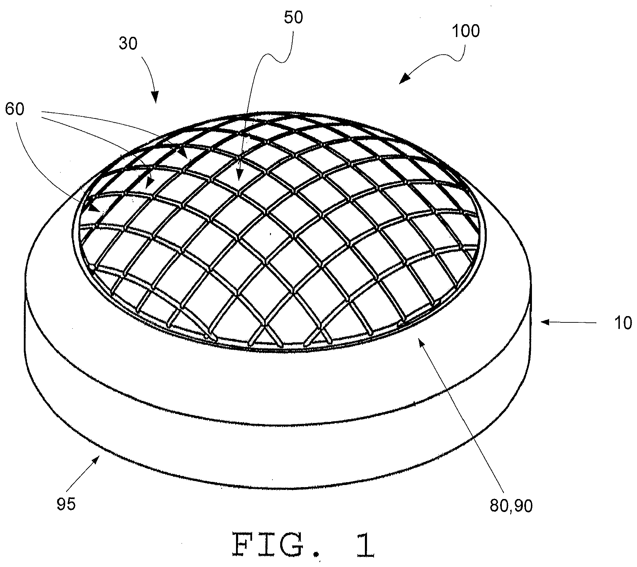

Figure 1 is an illustrated elevation of a rupture dome from the top and side.

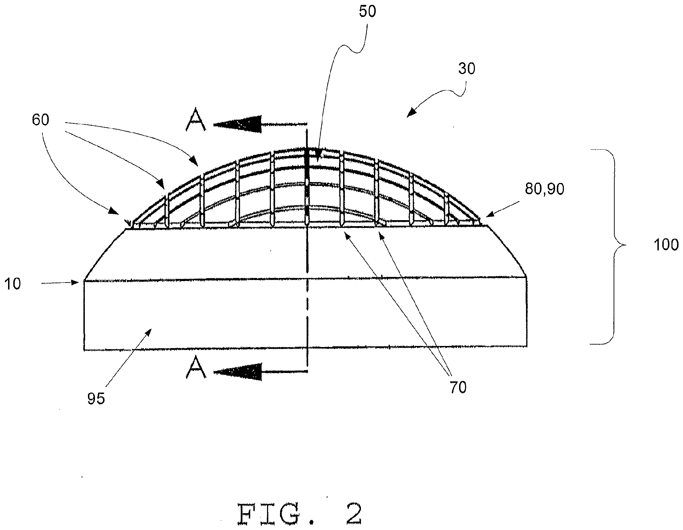

Figure 2 is a side elevation of a rupture dome showing an embodiment of groove and lip structures

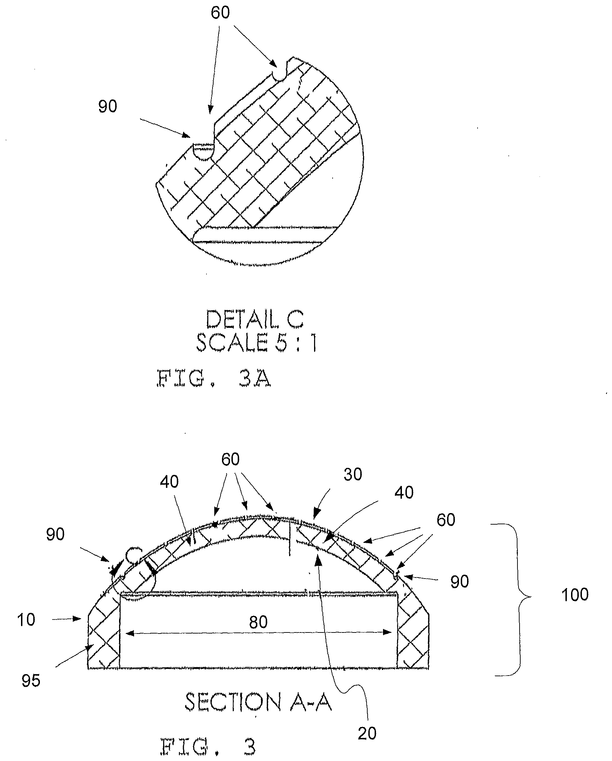

Figures 3 and 3a are a cross-section of the rupture dome of Figure 2 along line A-A, with Figure 3a providing an expanded detailed illustration of an embodiment of ball-end milled groove structures on the top surface of the rupture dome.

### DETAILED DESCRIPTION

The present invention provides for a rupture dome 100 for use as a breakable seal in a subassembly (not shown). The rupture dome 100 is made with an outer circumference the edge of which 10 fits within the subassembly (not shown) and is sealed to the subassembly which then seals the internal passageway of a fluid conduit (not shown) such as a tubing string for use in a well. Generally, the field to which this invention is directed is the oil and gas industry, more particularly pressure control in operations with respect to oil or gas wells, and even more particularly, deviated or non-vertical wells.

The rupture dome 100 is made of a frangible material such as a ceramic. It has a domed shape, with a hollowed or concave side 20 and a convex side 30. The arc of the concave 20 and convex 30 sides are, in an embodiment, similar or equivalent, making the dome's curved body 40 of a relatively even thickness.

Depending upon the diameter of the rupture dome 100, the thickness and curvature of the dome's body 40 will differ, being designed to withhold a predetermined range of fluid pressure from one side (applied to the convex side 30) and to break or rupture at a different but predetermined pressure threshold from the other side (applied to the concave side 20). In this way, the seal provided by the rupture dome 100 in the subassembly sealed to the tubing can be maintained, isolating the sealed portion of the tubing from the rest of the well, until pressure above the designed rupture pressure is applied to the concave side 20 of the rupture dome 100.

In a preferred embodiment, the rupture dome is designed to withstand 68,948 kPa (10,000 psi) from the high pressure bearing convex side 30 without breaking , but to breakaway or rupture when the pressure at the other (concave) side 20 exceeds the pressure on the other (convex) side 30 by 10-15% of the maximum pressure the dome's convex side can withstand. In one embodiment, the pressure dome can withstand a pressure differential where pressure on the convex side is the same as or up to 68,948 kPa (10,000 psi) greater than the pressure on the concave side before rupturing, but the pressure dome is designed so that it can withstand a pressure differential where the pressure on the concave side is 10,342 kPa (1500 psi) greater than the pressure on the convex side but will rupture if that pressure differential exceeds 10,342 kPa (1500 psi) (these numbers are by example, and are an approximation of a preferred embodiment). This means that if the pressure dome was in an environment sealing a well bore with pressure from formation of 62,053 kPa (9,000 psi), the dome could be ruptured by application of fluid pressure from surface equipment of 72,402 kPa (10,501 psi) or greater (a pressure differential of over 10,342 kPa (1500 psi)) under control of an operator. Similarly, if tested at a pressure on the convex side of 6,895 (1,000 psi), the dome can be ruptured by applying 17,244 kPa (2,501 psi) or greater to the concave side (a differential of greater than 10,342 kPa (1500 psi)). These examples are to show how the rupture pressure differential should be designed such that there is a small (something like 10-25% of the maximum pressure the convex side will withstand) but significant (so that there is a reduced chance of accidental rupture) pressure differential which can be applied to the concave side of the dome to cause it to rupture in a controllable (by manipulation of fluid pressure applied to the concave side) manner. In this way, the rupture dome may be purposefully ruptured by selective application of pressure from surface to the concave side 20 to cause the dome to fail, rupture, and break the seal it previously formed. To provide this performance characteristic set, a ceramic rupture dome 100 with a 6.03 cms (2 3/8") O.D. will have a dome wall 40 thickness of approximately 0.65 cm (0.2575") into which the grooves extend by 0.19 cm (0.075") and feature lines 70, 90 formed or cut into the dome wall 40, if milled for example, by a 0.076 cm (0.030") ball-end mill to a depth of about 0.19 cm (0.075").

To ensure that the rupture dome, when ruptured, does not break into large, irregular and harmful fragments of dome material, which could hang in, plug or damage downhole equipment or tubing, a specific pattern may be included in a surface of the rupture dome 100 - in a preferred embodiment, the pattern may be included in the outer surface of the convex side 30. The patterns 50 can be a symmetrical grid of features 60 in the outer surface of the convex side 30, or can be any suitable pattern, and can be included during the molding or forming stage of manufacture or machined or carved or otherwise made. In an embodiment, the features may be milled using a 0.076 cm (0.030") ball-end mill with 0.038 cm (0.015") radius, or a 0.051 cm (0.020") ball-end mill with 0.025 cm (0.010") radius in a squared grid pattern with feature lines 70 spaced approximately 0.476 cm (3/16 inches) apart.

The feature pattern 50 of lines 70 in the surface of the convex side 30 of the rupture dome 100 are, in a preferred embodiment, within a radius 80 which is also a feature line 90 in the same surface 30, which radius 80 is about or slightly smaller than the interior diameter of the subassembly (not shown). In a preferred embodiment, for use in a 6.03 cm (2 3/8") O.D. tubing string seal with 5.08 cm (2") I.D., this radius 80 will be approximately 5.08 cm (2"). This permits the rupture dome to break away when ruptured to
leave a clean passageway bounded by the radius 80 feature line 90 once the broken parts of the rupture dome break and are removed from the seal, leaving an essentially unimpaired passage.

The rupture dome 100 can have an outer circumferential wall 95 for attachment to the subassembly (not shown).

The above-described embodiments of the invention are intended to be examples only. Alterations, modifications and variations can be effected to the particular embodiments by those of skill in the art without departing from the scope of the invention, which is defined solely by the claims appended hereto.

## Claims

1. A rupture dome (100) for use as a breakable seal for an internal passageway of a wellbore tubing, said rupture dome being formed of a breakable material, said breakable material being ceramic, said rupture dome including:
i. a circular-shaped body with dome-shaped cross-section with
a. a convex side (30);
b. a concave side (20); and
c. an attached circumferential rim (10) for mounting to a seal on the inside of the tubing or a fitting on the tubing;
ii. the convex side (30) having a pattern (50) of features included in its surface to guide the breakage of the rupture dome, the pattern of features comprising at least a linear depression or ridge in the surface of the convex side (30);
iii. a portion of the body defined between the convex side (30) and concave side (20) forming a breakaway section, being frangible, and configured to hold high fluid pressure applied to the convex side, and to break when fluid pressure applied to the concave side exceeds a threshold;
**characterized in that** the breakaway section when ruptured as a result of application of pressure to the concave side (20) which exceeds the threshold, breaks into pre-determined fragments defined at least in part by the features included in the surface of the convex side (30).

2. The rupture dome of claim 1 wherein the pattern (50) of features includes at least one of:
i. a feature with a circular pattern with the same or similar diameter as the inner diameter of the tubing;
ii. a series of symmetrical grooves in a pattern to define the size of fragments into which the rupture dome will break when ruptured;
iii. a pattern of grooves or inclusions or ridges in the surface to encourage the dome to rupture in specific places to form pre-determined debris fragments.

3. The rupture dome of claim 1 with the rim formed to mate with a fixture in the tubing string so that the dome may be fitted and sealed, ruptured, then removed and replaced, so that the removable seal provided by the rupture dome may be easily repeated.

4. The rupture dome of claim 1 where the high fluid pressure sustained is approximately 68.948 kPa [10,000] psi.

5. The rupture dome of claim 1 made to rupture when fluid pressure applied to the concave side exceeds the fluid pressure on the convex side by a small but useful differential.

6. The rupture dome of claim 5 where the pressure differential is 10-25% of the maximum pressure sustainable by the convex side.

7. The rupture dome of claim 1 for 6.03 cm [2 3/8"] tubing.

8. The rupture dome of claim 1 for 7.3 cm [2 7/8"] tubing.

9. The rupture dome of claim 1 where the pattern of features is a cross-hatch of grooves or ridges or inclusions.

## Patentansprüche

1. Bruchkuppel (100) zur Verwendung als eine zerbrechliche Plombierung für einen Innendurchlass einer Bohrlochverrohrung, wobei die Bruchkuppel aus einem zerbrechlichen Material gebildet ist, wobei das zerbrechliche Material Keramik ist, wobei die Bruchkuppel Folgendes enthält:
(i) einen kreisförmigen Körper mit kuppelförmigem Querschnitt mit
a. einer konvexen Seite (30);
b. einer konkaven Seite (20); und
c. einem angebrachten Umfangsrand (10) zum Montieren an einer Plombierung auf der Innenseite der Verrohrung oder eines Fittings an der Verrohrung;
(ii) wobei die konvexe Seite (30) ein Muster (50) aus Merkmalen aufweist, die in ihrer Oberfläche enthalten sind, um das Brechen der Bruchkuppel zu führen, wobei das Muster aus Merkmalen mindestens eine lineare Vertiefung oder Erhöhung in der Oberfläche der konvexen Seite (30) umfasst;
(iii) wobei ein Abschnitt des Körpers, der zwischen der konvexen Seite (30) und der konkaven Seite (20) definiert ist, einen Wegbrech-Teilabschnitt bildet, der brüchig ist und dazu konfiguriert ist, einen hohen Fluiddruck, der auf die konvexe Seite ausgeübt wird, zu halten, und zu brechen, wenn ein Fluiddruck, der auf die konkave Seite ausgeübt wird, einen Schwellenwert überschreitet;
**dadurch gekennzeichnet, dass** der Wegbrech-Teilabschnitt, wenn er als ein Ergebnis der Ausübung eines Drucks auf die konkave Seite (20), der den Schwellenwert überschreitet, bricht, in vorbestimmte Fragmente zerbricht, die zumindest teilweise durch die Merkmale definiert sind, die in der Oberfläche der konvexen Seite (30) enthalten sind.

2. Bruchkuppel nach Anspruch 1, wobei das Muster (50) von Merkmalen mindestens eines von folgenden beinhaltet:
i. ein Merkmal mit einem kreisrunden Muster mit demselben oder einem ähnlichen Durchmesser wie der Innendurchmesser der Verrohrung;
ii. eine Reihe symmetrische Rillen in einem Muster, um die Größe von Fragmenten zu definieren, in welche die Bruchkuppel beim Zerbrechen zerbricht;
iii. ein Muster aus Rillen oder Einsenkungen oder Erhöhungen in der Oberfläche, um ein Brechen der Kuppel an bestimmten Stellen zu fördern, um vorbestimmte Trümmerfragmente zu bilden.

3. Bruchkuppel nach Anspruch 1, wobei der Rand so gebildet ist, dass er mit einer Befestigung der Verrohrungsfolge zusammenpasst, so dass die Kuppel angebracht und verplombt, zerbrochen, dann entfernt und ersetzt werden kann, so dass die entfernbare Plombierung, die durch die Bruchkuppel bereitgestellt wird, leicht wiederholt werden kann.

4. Bruchkuppel nach Anspruch 1, wobei der ausgehaltene hohe Fluiddruck etwa 68.948 kPa [10.000] psi beträgt.

5. Bruchkuppel nach Anspruch 1, die zum Zerbrechen gebracht wird, wenn ein Fluiddruck, der auf die konkave Seite ausgeübt wird, den Fluiddruck auf der konvexen Seite um eine kleine, aber zweckdienliche Differenz überschreitet.

6. Bruchkuppel nach Anspruch 5, wobei die Druckdifferenz 10 bis 25 % des Maximaldrucks beträgt, der von der konvexen Seite ausgehalten werden kann.

7. Bruchkuppel nach Anspruch 1 für eine 6,03-cm- [2 3/8"-]Verrohrung.

8. Bruchkuppel nach Anspruch 1 für eine 7,3-cm- [2 7/8"-]Verrohrung.

9. Bruchkuppel nach Anspruch 1, wobei das Muster von Merkmalen ein Gitterraster aus Rillen oder Erhöhungen oder Einsenkungen ist.

## Revendications

1. Dôme de rupture (100) destiné à être utilisé comme joint cassable pour un passage interne d'une colonne de puits, ledit matériau de dôme étant formé d'un matériau cassable, ledit matériau cassable étant de la céramique, ledit dôme de rupture comprenant :
i. un corps en forme circulaire avec une section transversale en forme de dôme comportant
a. un côté convexe (30) ;
b. un côté concave (20) ; et
c. un rebord circonférentiel attaché (10) à monter sur un joint à l'intérieur de la colonne ou sur une monture sur la colonne ;
ii. le côté convexe (30) comprenant un profil (50) de caractéristiques dans sa surface pour guider la rupture du dôme de rupture, le profil de caractéristiques comprenant au moins une dépression ou une crête linéaire dans la surface du côté convexe (30) ;
iii. une partie du corps définie entre le côté convexe (30) et le côté concave (20) formant une section de libération frangible et conçue pour maintenir une pression de fluide élevée appliquée au côté convexe, et pour se rompre quand la pression de fluide appliquée au côté concave dépasse un seuil ;
**caractérisé en ce que**
la section de libération, quand elle est rompue suite à l'application de pression au côté concave (20) qui dépasse le seuil, se rompt en fragments prédéterminés définis au moins en partie par les caractéristiques comprises dans la surface du côté convexe (30).

2. Dôme de rupture selon la revendication 1 dans lequel le profil (50) de caractéristiques comprend au moins un élément parmi :
i. une caractéristique avec un profil circulaire de diamètre identique ou similaire au diamètre interne de la colonne ;
ii. une série de rainures symétriques dans un profil pour définir la taille de fragments dans lesquels le dôme de rupture sera rompu lors de la rupture ;
iii. un profil de rainures, d'inclusions ou de crêtes dans la surface pour encourager le dôme à se rompre dans des endroits spécifiques pour former des fragments de débris prédéterminés.

3. Dôme de rupture selon la revendication 1, avec le rebord formé pour s'apparier avec une fixation dans l'anneau de colonne de sorte que le dôme peut être ajusté et scellé, rompu, puis enlevé et remplacé, de sorte que le joint amovible fourni par le dôme de rupture peut être facilement répété.

4. Dôme de rupture selon la revendication 1, dans lequel la pression de fluide élevée soutenue est d'environ 68 948 kPa [10 000] psi.

5. Dôme de rupture selon la revendication 1, fait pour se rompre quand la pression de fluide appliquée au côté concave dépasse la pression de fluide sur le côté convexe d'un différentiel petit mais utile.

6. Dôme de rupture selon la revendication 5, dans lequel le différentiel de pression est de 10 à 25 % de la pression maximum pouvant être soutenue par le côté convexe.

7. Dôme de rupture selon la revendication 1, pour une colonne de 6,03 cm [2 3/8"]

8. Dôme de rupture selon la revendication 1, pour une colonne de 7,3 cm [2 7/8"].

9. Dôme de rupture selon la revendication 1, dans lequel le profil de caractéristiques est un quadrillage de rainures, de crêtes ou d'inclusions.
